# EUROPEAN PATENT SPECIFICATION

(11) **EP 0 655 368 B1**
(45) Date of publication and mention of the grant of the patent: **29.09.1999**
(21) Application number: 94308615.7
(22) Date of filing: 22.11.1994
(51) Int. Cl.: B60R 21/20, B23P 11/00, B23P 19/04

(54) **Air bag unit and assembling method and apparatus therefor**
Luftsackmodul und Verfahren und Vorrichtung zur Zusammensetzung eines solchen Moduls
Module de sac gonflable et procédé et dispositif d'assemblage d'un tel module

(30) Priority: 22.11.1993 JP 29217793; 03.03.1994 JP 3332894
(43) Date of publication of application: 31.05.1995
(60) Divisional application: 98115250.7
(73) Proprietor: Bridgestone Corporation, Tokyo (JP)
(72) Inventor: Terasawa, Tomozane, Yokohama-shi, Kanagawa-ken (JP); Iino, Yasuhiro, Yokohama-shi, Kanagawa-ken (JP); Matsushima, Yosuke, Sagamihara-shi, Kanagawa-ken (JP); Nishimura, Hirohito, Yokohama-shi, Kanagawa-ken (JP)
(74) Representative: Stoner, Gerard Patrick

(56) References cited:
- DE-A- 4 414 743
- DE-C- 3 528 819
- FR-A- 2 443 602
- FR-A- 2 662 411
- FR-A- 2 715 902
- US-A- 5 201 541

## Description

This disclosure relates to air bag apparatus for mounting on a steering wheel, front instrument panel, front door trim or the like of an automobile, and more particularly to the arrangement for mounting and securing the pad cover of such apparatus onto a base plate which is mounted on the steering wheel etc. by way of a mounting plate or a like element.

The present disclosure relates also to an assembling process for such air bag apparatus.

The pad cover is also referred to in the art as "module cover", "receiving cover", "lid", "cover door" or "deployment door", and is used as a case or housing for receiving an air bag or acting as cushioning.

Known arrangements of the type mentioned are disclosed, for example, in JP-A-55/110643, JP-A-63/184549, JP-A-4/27639 and US-A-5201541.

FIG. 24 shows the arrangement of JP-A-4/27639. Air bag apparatus includes an air bag 21 mounted on a mounting plate 23 and an air bag cover 24 which covers the air bag 21. An upright portion 26 extends around the edge of a flat portion 23A of the mounting plate 23 on which the air bag 21, an inflator 22 and a ring-like bag retainer 18 are mounted. A side wall 25 of the air bag cover 24 is held against the upright plate portion 26 by an outer stiffening collar 12 secured by rivets 13. This is a "rivet type" mounting arrangement.

FIG. 25 shows the arrangement of JP-A-55/110643. A mounting plate 23 and the circumferential wall 25 of the air bag cover 24 are snapped together by a pawl plate 14 and a retaining wall 16 around the mounting plate's edge which fits in an insertion groove 17 around the lower face of the cover wall 25. The arresting pawl 15 engages a groove 28 on the inner face of the cover wall 25. This is a "snap-in type" mounting arrangement.

These conventional arrangements use a plurality of plates or parts and the structure is complicated. Consequently, the number of production steps is large, leading to high cost. Also the device is heavy which at a central portion of a steering wheel results in a large moment of inertia around the axis of the steering wheel.

US-A-5201541, which shows the features of the preamble of claim 1 describes air bag apparatus in which the upturned periphery of the base plate has a series of resilient fingers, each bent outwardly and downwardly at its top so as to snap through corresponding slits in the re-entrant downward wall of the cover which is pushed over it, trapping the cover in place.

General aims herein are proposals of new and useful structures for air bag mountings, and methods and means for assembling them.

One preferred aim is to provide air bag apparatus of low weight which is simple in structure and easy to assemble while assuring sufficient strength.

Another preferred aim is to provide an assembling method by which such air bag apparatus can be assembled in accordance with a simple fastening method, to achieve improvement in assembling feasibility and productivity.

In one aspect we propose air bag apparatus for vehicle driver protection comprising an air bag, a base plate for mounting a gas generator for inflating the air bag, and a pad cover to accommodate the air bag and gas generator, the pad cover having a lower extremity at which it is secured to the base plate,
characterised in that
for securing the pad cover the base plate is formed with a downwardly-extending part forming an outwardly-directed inner face portion, a bottom portion contiguous with the inner face portion and extending outwardly from the bottom thereof, and an inwardly-directed outer face portion extending upwardly from the bottom portion, the lower extremity of the pad cover being held caulked between the opposed inner and outer face portions so as to be secured thereto.

Consequently, the terminal portion of the pad cover can be mounted on the base plate with sufficient strength using a simple structure.

Furthermore, since the base plate itself can have a weight comparable to that of a conventional base plate, and the mounting may be done without additional members, one can obtain good operability, reduction in part costs and low weight.

Where means is provided for preventing release of the pad cover's lower extremity, as set out in claims 2, 3, 4 and 5, blowing off of the pad cover can be prevented e.g. when the cover is broken at a planned break line upon operation of the air bag.

Other aspects herein are methods of making such air bag apparatus as set out in claims 8 and 9, in which the base plate periphery is deformed to bring it into the appropriate engagement with the pad cover's lower extremity. This may be by means of a cam slide apparatus which is disposed around the air bag apparatus and acts to convert a pressing force in a vertical direction into a caulking force acting to deform the base plate's outer face portions simultaneously inwardly.

In order to deform one or a plurality of the caulking portions of the base plate simultaneously to secure the base plate to the pad cover, a pressing portion of a press apparatus can be disposed above the cam slide apparatus. The partly-assembled air bag apparatus, wherein leg portions of the pad cover for accommodating the air bag are temporarily placed on the caulking portions of the base plate periphery, can be placed on a work receiving table substantially at the centre of the press base. When the press starts its compression, press blocks of the cam slide apparatus disposed on the press base are pressed downwardly and inclined cam faces at the lower ends of the press blocks act upon the cam faces of caulking blocks of the cam slide apparatus to slidably move the caulking blocks in horizontal directions, deforming the caulking portions of the base plate.

In the drawings;
FIG. 1 is a section view showing an air bag apparatus of a first embodiment;
FIG. 2 is a perspective view showing a base plate of the apparatus of FIG. 1;
FIGS. 3(A) and 3(B) are a sectional view and an exploded perspective view, respectively of a second embodiment;
FIG. 4 is a sectional view of the apparatus of FIGS. 3(A) and 3(B);
FIG. 5 is a sectional view of a fourth embodiment;
FIGS. 6(A) and 6(B) are a sectional view and a partial enlarged sectional view respectively of a fifth embodiment;
FIGS. 7(A) and 7(B) are a sectional view and a partial enlarged sectional view respectively of a sixth embodiment;
FIGS. 8(A), 8(B) and 8(C) are a sectional view, a partial enlarged perspective view and a partial enlarged sectional view respectively of a seventh embodiment;
FIGS. 9(A), 9(B) and 9(C) are a perspective view and partial enlarged sectional views and FIGS. 9(D) and 9(E) are a perspective view and a partial enlarged sectional view respectively of an eighth embodiment with variants;
FIGS. 10(A) and 10(B) are an exploded perspective view and a partial enlarged sectional view and FIGS. 10(C) and 10(D) are a perspective view and a partial enlarged sectional view respectively of a ninth embodiment with variants;
FIG. 11 is a sectional view of a tenth embodiment;
FIG. 12 is a sectional view of an eleventh embodiment;
FIG. 13 is a sectional view of a twelfth embodiment;
FIGS. 14 and 15 are sectional and plan views illustrating an assembling method and assembling apparatus;
FIGS. 16 to 20 are sectional views of variant cam slide arrangements;
FIGS. 21 to 23 show refinements of the assembly apparatus, and

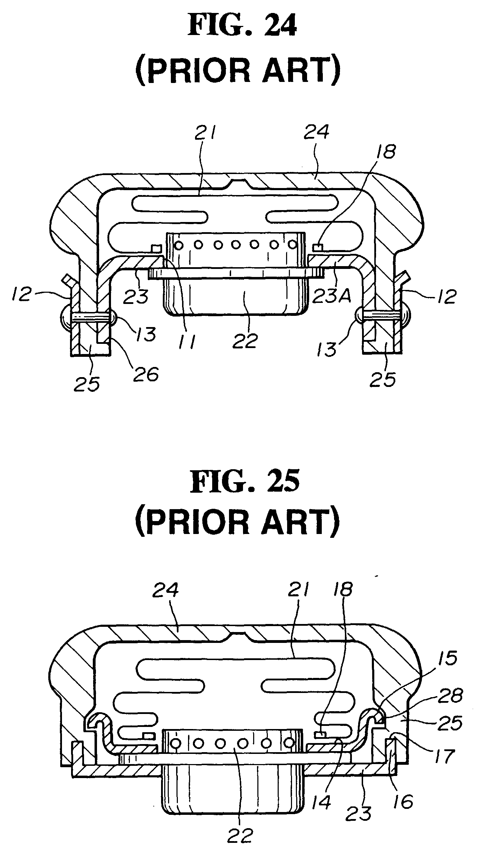

FIGS. 24 and 25 are sectional views of prior art, already described.

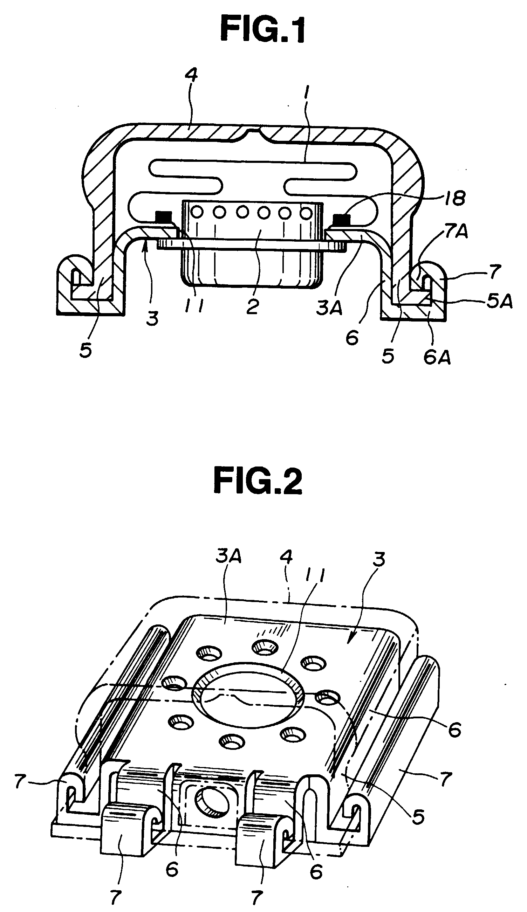

Referring first to FIGS. 1 and 2, the first embodiment includes an air bag 1, a gas generator 2 for expanding or inflating the air bag 1, and a retainer 18 for mounting the air bag 1 on a base plate 3. The air bag 1, the gas generator 2, the retainer 18 and so forth are mounted on a flat plate portion 3A of the base plate 3.

The gas generator 2 is inserted in and attached to a mounting hole 11 at the centre of the base plate 3: see FIG. 2.

The air bag 1, gas generator 2 and so forth are accommodated in a pad cover 4, and a plurality of terminal flanges 5A are provided at lower ends of a plurality of terminal portions 5 of the pad cover 4 such that they extend parallel to the flat plate portion 3A of the base plate 3.

The base plate 3 has a plurality of outwardly-directed side inner face portions 6 formed by bending part of the same in a downward direction, that is, in the direction away from a passenger of a vehicle in which the air bag apparatus is incorporated, and a bottom portion 6A formed contiguously to each of the side inner face portions 6 by bending the same outwardly such that it extends parallel to the flat plate portion 3A. The lower end of the terminal portion 5 of the pad cover 4 having the terminal flange 5A thereon is disposed along the side inner face portion 6 and the corresponding bottom portion 6A. The bottom portion 6A is further folded back in such a manner as to surround the terminal portion flange 5A, forming an inwardly-directed side outer face portion 7 so that the terminal portion 5 of the pad cover 4 is held between and secured to the side outer face portion 7 and the side inner face portion 6 which thereby form a caulking portion.

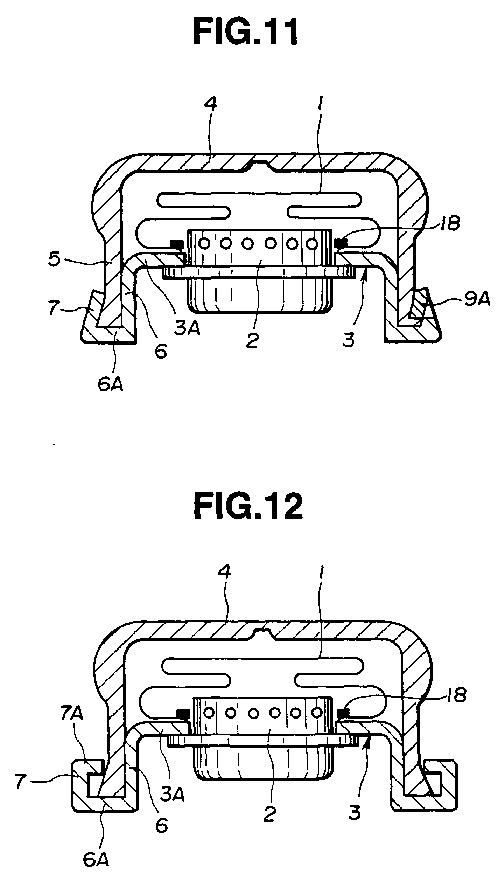

Each of the side outer face portions 7 is further folded back to form a terminal holding portion 7A preventing release of the terminal portion 5 of the pad cover 4 from the base plate 3. The terminal holding portion 7A may alternatively be formed as a riser element or elements 9A: see FIG. 11 described later. It is to be noted that the manner in which the terminal portion 5 of the pad cover 4 is held between and secured to the caulking portion only requires that release of the terminal portion 5 of the pad cover 4 from it includes a caulking condition, wherein the side outer face portion 7 or the terminal holding portion 7A bites into the terminal portion 5 of the pad cover 4 to such a degree that the terminal portion 5 is deformed, and also a condition wherein the caulking portion and the terminal portion 5 of the pad cover 4 hold each other suitably or somewhat loosely.

While the side inner face portions 6 and the side outer face portions 7 on the opposite sides of the base plate 3 are formed continuously in FIG. 2, the side inner face portion 6 and the side outer face portion 7 on the front side are formed intermittently to hold and secure the terminal portion 5 of the pad cover 4 to caulk the latter.

The caulking portions are formed by deforming part of the base plate 3 into a predetermined shape, and the terminal portions 5 of the pad cover 4 can be mounted on the base plate 3 with a sufficient degree of strength with a simple structure by these caulking portions.

As mounting parts, it is only required to prepare the pad cover and the base plate. This can contribute very much to improvement in operability, reduction in part cost and reduction in weight. Further, since the terminal holding portions 7A as means for preventing release of the terminal portions 5 of the pad cover 4 are provided on the side outer face portions 7 to control upper portions of the terminal portion flanges 5A of the terminal portions 5 of the pad cover 4, blowing off of the broken pad cover 4 upon operation of the air bag 1 can be prevented effectively.

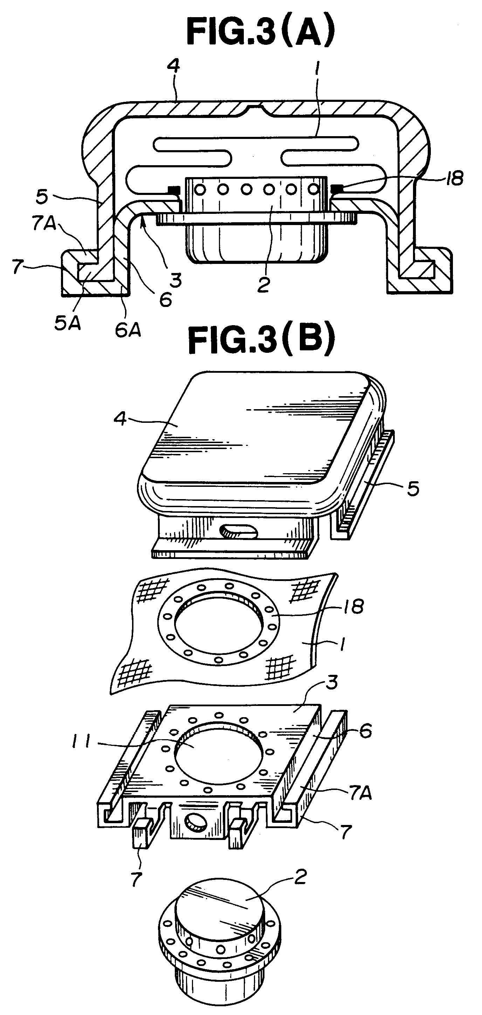

FIGS. 3(A) and 3(B) show a second embodiment, similar to the first embodiment except that the terminal holding portions 7A are formed not by folding back the side outer face portions 7 as in the first embodiment but by bending the side outer face portions 7 parallel to the bottom portions 6A of the base plate 3 in such a manner as to surround the terminal portion flanges 5A.

The terminal holding portions 7A can be formed by simply bending the side outer face portions 7 in parallel to the bottom portions 6A of the base plate 3, and processing of the end portions of the side outer face portions 7 is comparatively easy.

FIG. 3(B) is an exploded perspective view of the same apparatus.

A head portion of the gas generator 2 is inserted in the mounting hole 11 of the base plate 3, and the air bag 1 is held from above by the retainer 18. The retainer 18, air bag 1, base plate 3 and gas generator 2 are secured to each other by means of through-bolts or some other suitable means. Further, the terminal portions 5 of the pad cover 4 can be secured reliably to the caulking portions described already.

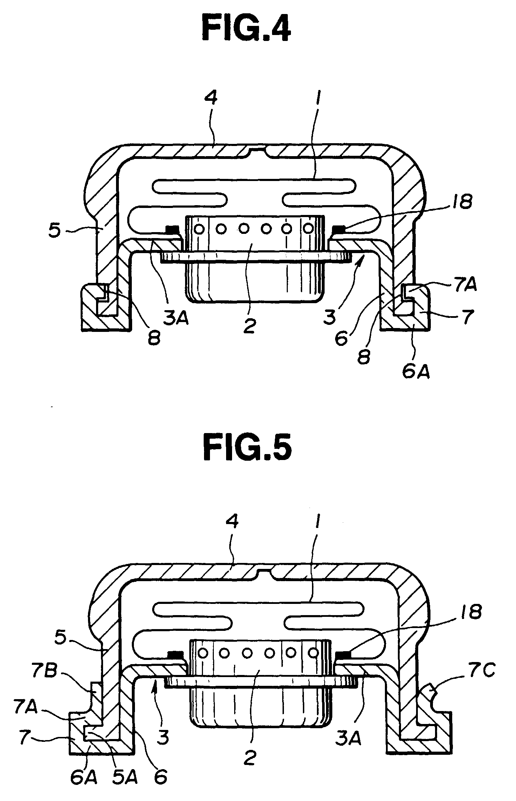

FIG. 4 shows a third embodiment. The side outer face portion 7 and terminal holding portion 7A of the base plate 3 are similar to the second embodiment. However the terminal portion 5 of the pad cover 4 does not have terminal flanges 5A but is formed straight, with arresting grooves 8 formed therein to engage with the terminal holding portions 7A of the base plate 3.

The terminal portions 5 of the pad cover 4 can be formed in a straight shape, which simplifies the structure.

FIG. 5 shows a fourth embodiment. This is similar, in shape of the base plate 3 and the terminal portions 5 of the pad cover 4, to the second embodiment of FIG. 3. However the terminal holding portions 7A of the base plate 3 in the second embodiment are further bent upwardly to form accompanying portions 7B parallel to the side inner face portions 6.

The pressures of the caulking faces of the terminal holding portions 7A to the terminal portions 5 of the pad cover 4 can then be reduced to allow sure holding of and reduction of damage to the terminal portions 5 of the pad cover 4. Further, as shown on the outside in FIG. 5, a divergent escape portion 7C may be formed at an upper end of an accompanying portion or portions 7B in order to prevent side wall faces of the terminal portions 5 of the pad cover 4 from being damaged by edges at the upper ends of the accompanying portions 7B upon caulking.

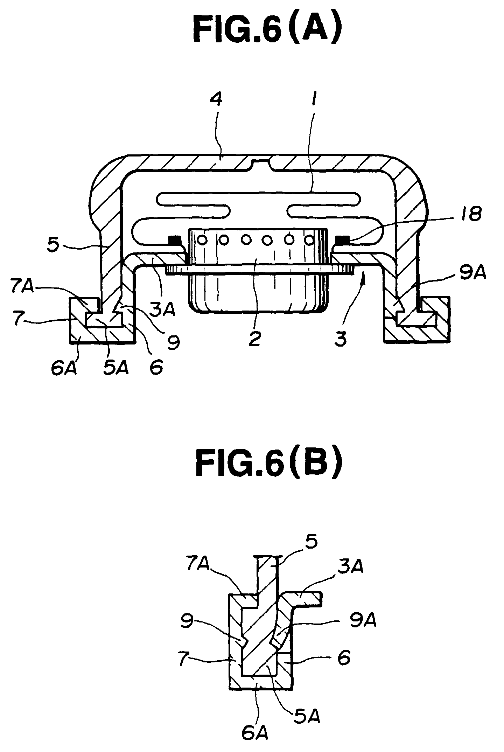

FIGS. 6(A) and 6(B) show a fifth embodiment, differing from the second embodiment in that arresting pawls 9 or riser pieces 9A serving as stopper means for preventing release of the terminal portions 5 of the pad cover 4 are provided on the side inner face portions 6 of the base plate 3.

FIG. 6(A) shows the arresting pawls 9 or riser pieces 9A provided only on the inner sides of the terminal portion flanges 5A. FIG. 6(B) shows apparatus wherein they are provided on both sides.

Upon caulking at the side outer face portions 7, the arresting pawls 9 or riser pieces 9A bite into side wall faces of the terminal portions 5 to press them strongly between the side outer face portions 7 and the terminal holding portions 7A and reliably prevent their release.

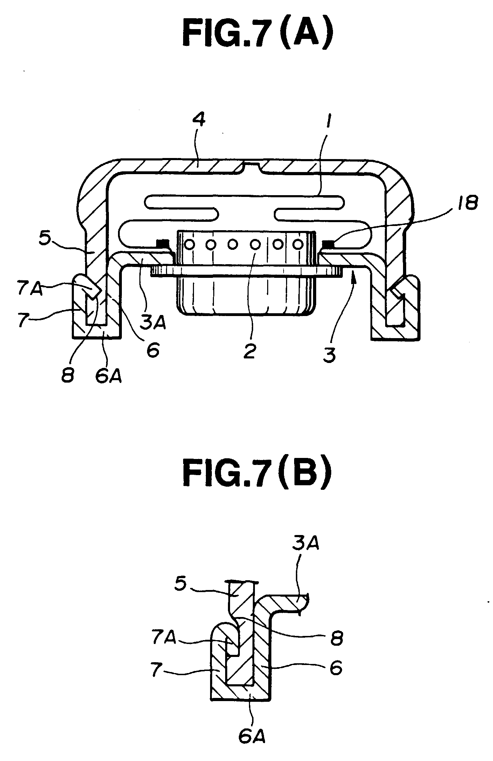

FIGS. 7(A) and 7(B) show a sixth embodiment, similar to the third embodiment (FIG. 4) in that the terminal portions 5 of the pad cover 4 are formed straight, i.e. without transverse projections from the envelope of the wall shape. However, in the air bag apparatus shown in FIG. 7(A), the terminal holding portions 7A of the base plate 3 and the arresting grooves 8 formed in the terminal portions 5 of the pad cover 4 for receiving the terminal holding portions 7A are directed obliquely downwardly at an acute angle.

Meanwhile, in the variant shown in FIG. 7(B) the terminal holding portions 7A are further folded back until they extend parallel to the side outer face portions 7 and are arrested at stepped portions at lower ends of the arresting grooves 8.

Once the side outer face portions 7 have been caulked, the terminal portions 5 of the pad cover 4 will not release readily.

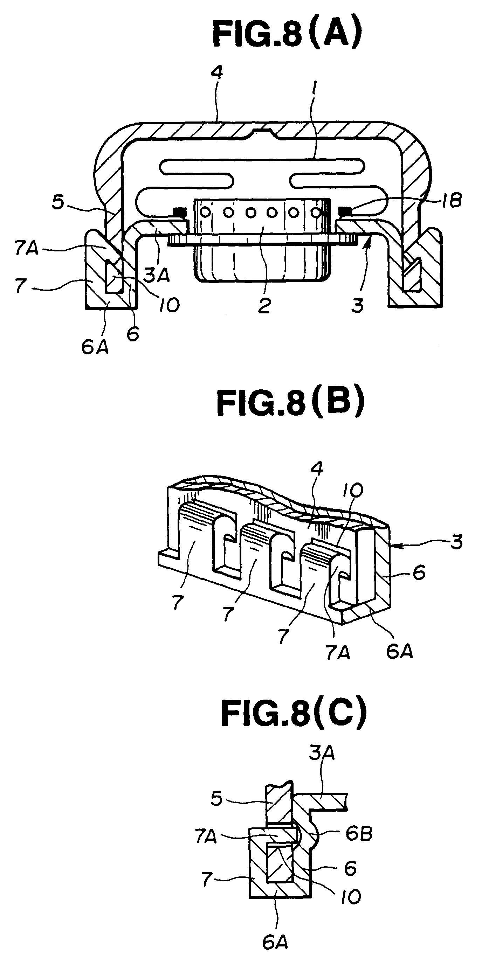

FIGS. 8(A), 8(B) and 8(C) show air bag apparatus according to a seventh embodiment. As can be understood from FIG. 8(A), the terminal holding portions 7A of the base plate 3 are directed obliquely downwardly at an acute angle (as in the sixth embodiment), and an arresting hole 10, also directed obliquely downwardly at an acute angle, is provided through each of the terminal portions 5 to receiving the terminal holding portions 7A.

FIG. 8(B) shows this portion in perspective. A plurality of arresting holes 10 are provided through each of the terminal portions 5 of the pad cover 4, and a plurality of side outer face portions 7 (on which terminal holding portions 7A for engaging with the arresting holes 10 are provided) are formed by folding back the base plate 3 in a plurality of places. The number, width, length, shape and so forth of the terminal holding portions 7A can be set suitably in accordance with the shapes and the dimensions of different portions of the air bag.

FIG. 8(C) shows a variant in which the arresting holes 10 extend parallel to the bottom portions 6A of the base plate 3. Accordingly, the terminal holding portions 7A of the side outer face portions 7 are also inserted parallel to and engaged with the bottom portions 6A.

Furthermore, inner end portions of the terminal holding portions 7A are retained in recessed portions 6B formed on the side inner face portions 6 of the base plate 3.

By these means, any movement of the terminal portions 5 of the pad cover 4 is restrained, preventing release of the terminal portion 5 of the pad cover 4 which is thus secured firmly to the base plate 3.

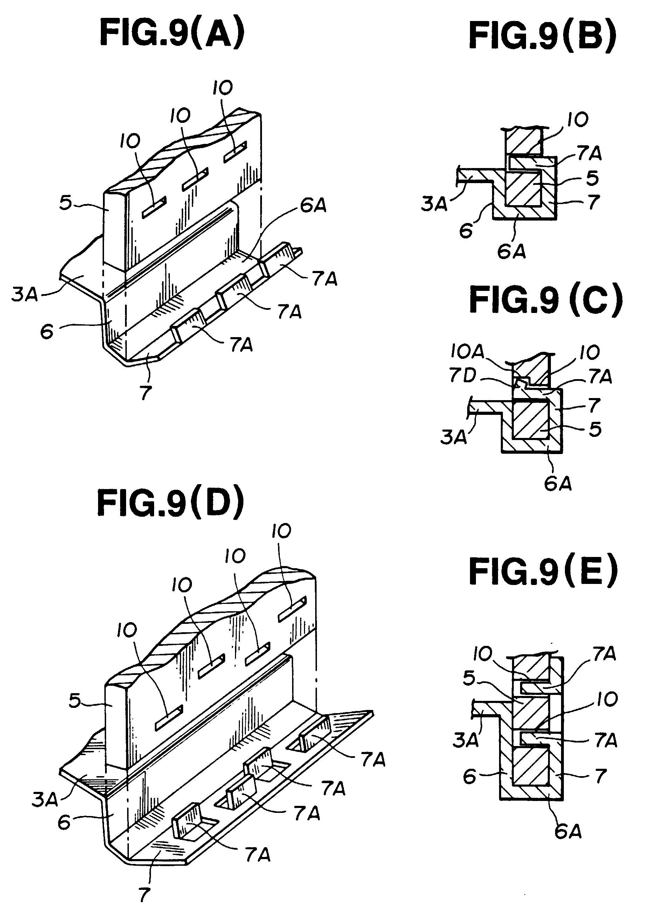

FIGS. 9(A) to 9(E) show variants on an eighth embodiment; these are modifications to the apparatus of FIG. 8(C). The arresting hole 10 in each of the terminal portions 5 is formed parallel to the bottom portions 6A of the base plate 3, but the plurality of terminal holding portions 7A of the side outer face portions 7 are formed by cutting and raising the side outer face portions 7, to be inserted in the holes 10.

FIG. 9(C) shows a terminal holding portion pawl 7D formed at an inner end portion of each of the terminal holding portions 7A by bending. This is arrested with certainty at a stepped portion of an enlarged portion 10A in the arresting hole 10.

FIG. 9(D) shows a modification in which the arresting holes 10 are perforated in a zigzag pattern at alternating upper and lower locations along each of the cover terminal portions 5. A plurality of riser pieces is formed on the side outer face portion 7 of the base plate 3 in a corresponding zigzag by cutting and raising the side outer face portion 7 in alternating opposite directions, providing terminal holding portions 7A to be arrested by the arresting holes 10 as a dual release preventing means.

By these means, any movement of the terminal portions 5 is restrained as before.

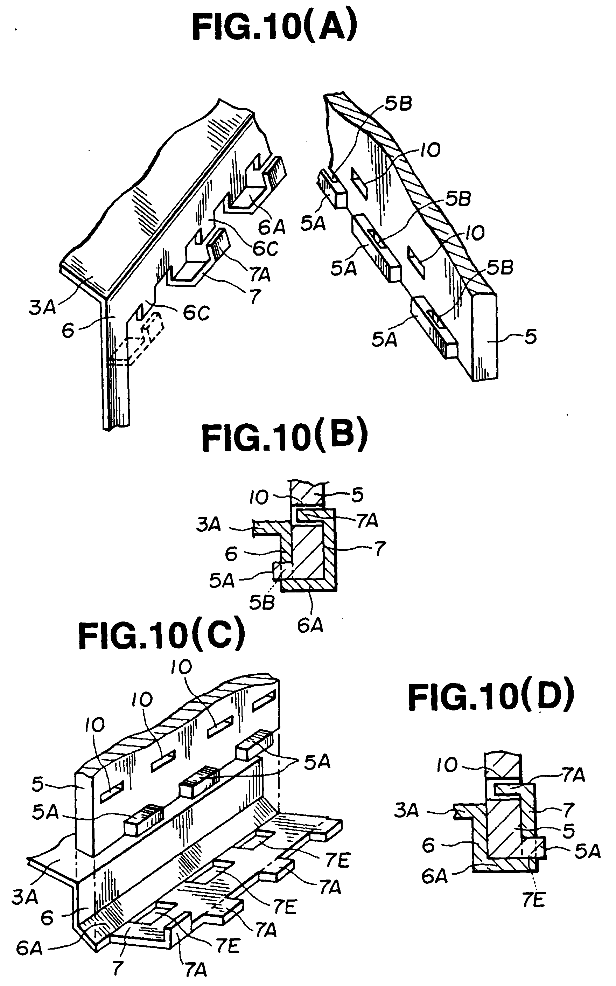

FIGS. 10(A) to 10(D) shows variants of a ninth embodiment, differing from those of FIGS. 8 and 9 in that, as in FIGS. 3, 5, 6, 6(A) and 6(B), a terminal flange 5A is formed on the terminal portion 5 of the pad cover 4. Here, a plurality of such terminal flanges 5A are provided intermittently and extending inwardly.

FIG. 10(A) shows how elongated portions constituting the caulking portions 7, 7A are formed alternatively with tongue pieces 6C which fit in vertical tongue piece insertion holes 5B through the inward terminal flanges 5A.

FIG. 10(B) shows how the entire pad cover 4 can be secured firmly to the base plate 3 by, in addition to the release prevention of the terminal holding portions 7A in the arresting holes 10, the further release prevention of the engagement of the tongue pieces 6C in the insertion holes 5B.

In the air bag apparatus of FIG. 10(C), a plurality of terminal portion flange insertion holes 7E are perforated in the side outer face portions 7 serving as caulking portions of the base plate 3, with terminal holding portions 7A formed intermittently their upper ends. Terminal flanges 5A are formed intermittently on the outer side of the terminal portions 5 of the pad cover 4, and arresting holes 10 through the terminal portions 5.

FIG. 10(D) shows the terminal flanges 5A inserted in and arrested by the terminal portion flange insertion holes 7E, and the terminal holding portions 7A inserted in and arrested by the arresting holes 10.

The combined release prevention actions of the engagement of the terminal holding portions 7A with the arresting holes 10 and the engagement between the terminal portion flanges 5A and the terminal portion flange insertion holes 7E secures the entire pad cover 4 firmly to the base plate 3.

FIG. 11 shows a tenth embodiment in which the pad cover 4 has the terminal portions 5 formed straight or with a slightly downwardly divergent profile. The side outer face portions 7 of the base plate 3 are caulked such that they extend along the side wall faces of the terminal portions 5 of the pad cover 4. Thus, the air bag apparatus has a simplified structure.

A riser piece 9A may be provided on each of flattened side outer face portions 7 as shown on the right side in FIG. 11 in order to enhance the release prevention.

FIG. 12 shows an eleventh embodiment with terminal portions 5 similar to those in FIG. 11. However, in order to caulk the side outer face portions 7 of the base plate 3 to press and hold the side wall faces of the terminal portions 5 of the pad cover 4, terminal holding portions 7A parallel to the flat plate portion 3A are opposed to the terminal portions 5 of the pad cover 4, and the terminal portions 5 of the pad cover 4 are held strongly by an edge action of corner portions of the terminal holding portions 7A.

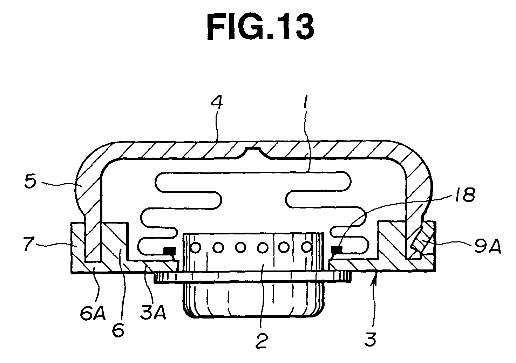

FIG. 13 shows a twelfth embodiment in which the side inner face portions 6 of the base plate 3 bend upwardly, that is, toward the driver, and then fold back downwardly, whereafter they bend out parallel to the flat plate portion 3A of the base plate 3 to form the bottom portions 6A, and then upwardly to form the side outer face portions 7. As in FIG. 11 the side outer face portions 7 of the base plate 3 are caulked such that they extend along and are pressed against the terminal portions 5 of the pad cover 4, which are formed substantially straight or with a slightly downwardly divergent profile. Consequently, simplification in structure can be achieved. Further, since the position of the flat plate portion 3A of the base plate 3 on which the air bag 1 and the gas generator 2 are mounted can be positioned downwardly relative to the position of the lower ends of the terminal portions 5 of the pad cover 4, because of the upwardly-extending part of the side inner face portions 6 of the base plate 3, the pad cover 4 can be formed with a maximum volume.

A riser piece 9A for release prevention may be provided on each of the side outer face portions 7 as shown on the right side of FIG. 13.

In all of the structure described above, the portions of the base plate to which the pad cover is secured are initially open. The pad cover is secured only by deforming the base plate side, after the base plate has been combined with the pad cover, into a predetermined shape to caulk the base plate to the pad cover, in other words, merely by deforming the base plate. However, naturally the base plate may be secured to the pad cover by means of riveting or the like in addition to caulking, or by means of a structure wherein the base plate fits in a groove formed in the pad cover without employing a caulking procedure.

It is a matter of course that various combination shapes of the terminal portions of the pad cover and the base plate may be adopted within the scope of the present claims.

We made experiments with apparatus according to the embodiments described in detail above.

In the experiments, expansion or inflation of an air bag apparatus was performed experimentally at -40°C to 90°C which provide an ordinary temperature range in which an air bag is used. The experiments proved that the air bag apparatus exhibited mounting strengths substantially equal to those of conventional air bag apparatus, and exhibited good air bag expansion performances.

Besides, as a result of reduction in weight, the performance of the steering wheel was improved.

Furthermore, as regards the number of parts, since bolts, rivets, stiffening plates, pawl plates or the like were not needed, reduction in weight was realized. Further, as regards the production cycle, the procedure which had required approximately 30 seconds for a conventional air bag apparatus was reduced to approximately 15 seconds.

In addition, where the side inner face portion of the base plate is bent first toward the driver, the position of the base plate can be relatively displaced downwardly, and the pad cover can have a maximum volume.

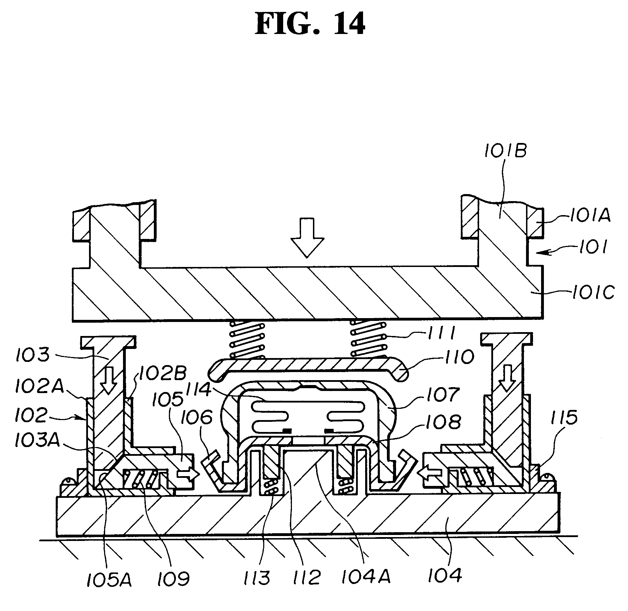

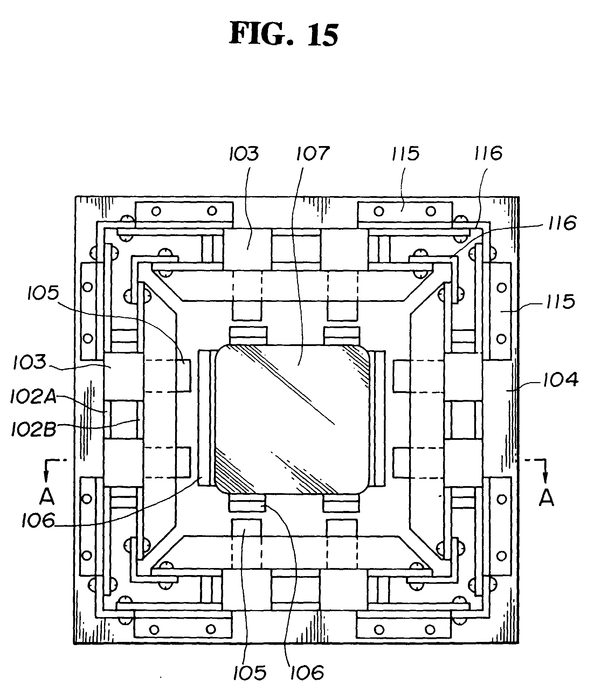

FIGS. 14 and 15 illustrate a method of assembling the air bag apparatus as described above and show assembling apparatus 101;

FIG.15 is a plan view with a top press portion removed, and FIG.14 is a section at A-A of FIG.15,showing air bag apparatus as a workpiece. Leg portions 107A of a pad cover 107, which accommodates an air bag 114 and so forth, are temporarily placed on caulking portions 106 of a base plate 108 which in turn is placed on a work receiving table 104A at a substantially central portion of a press base 104. The air bag apparatus urges a plurality of protruding pins 112 downwardly. The protruding pins 112 are embedded in the work receiving table 104A with biasing springs 113 to resiliently displace the air bag apparatus workpiece for removal of the same after assembly. When a press portion 101C of the press apparatus 101 begins to be moved downwardly by a piston rod 101B in a hydraulic cylinder 101A to start a compression operation, an upper face of the pad cover 107 of the air bag apparatus is first held by a holding frame 110 provided at a lower portion of the press portion 101C with biasing springs 111 interposed therebetween. The press portion 101C then presses down (as indicated by arrows) pairs of press blocks 103 of cam slide apparatus 102. Each cam slide apparatus 102 is constituted from the press block 103 - disposed on the press base 104 and slidably movable in a vertical direction - and a caulking block 105A - located at a cam face 105 thereof adjacent cam faces 103A of the press blocks 103, and slidably movable in a horizontal direction. Consequently , the press block cam faces 103A, which are inclined at their lower ends, act on the cam faces 105A of the caulking blocks 105 to slidably move the caulking blocks 105 in horizontal directions (as indicated by the arrows) and so deform the caulking portions 106 of the base plate 108 to be fastened and secured firmly to the leg portions 107A of the pad cover 107.

After the caulking step is completed, the pressing portion 101C is retracted upwardly, whereupon the caulking blocks 105 and the press blocks 103 are returned to their original positions by return springs 109 built in the caulking blocks 105. Simultaneously, the air bag apparatus as a unit is resiliently displaced upwardly by the sprung protruding pins 112 and can be taken out readily.

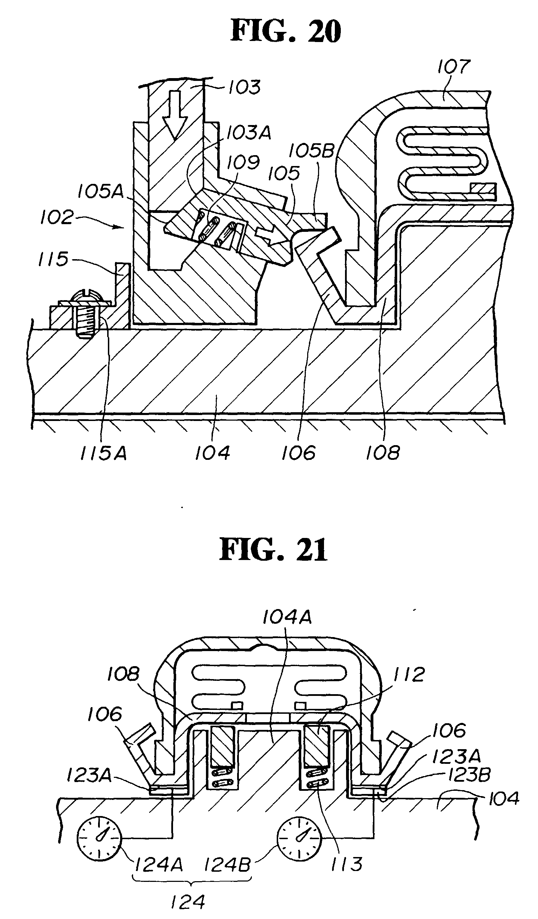

Each cam slide apparatus 102, for converting vertical pressing forces into horizontal caulking forces, includes (as shown in FIG. 15) an outer frame 102A and an inner frame 102B disposed around the air bag apparatus workpiece and each having a substantially square shape. The frames 102A, 102B are secured at corner portions thereof for adjustment of their fixed positions by fixing angles 116. In particular, the frame dimensions can be adjusted in accordance with the size of the workpiece. In this instance, holding angles 115 for holding the outer frames 102A from the outside have elongate holes to take up the adjustment (see FIG. 20: feature 115A).

The number of sets of blocks around the workpiece is determined in accordance with the number and the positions of the caulking portions 106 of the base plate 108 to be caulked around the workpiece on the square cam slide apparatus 102, such that one or plural caulking portions 106 are deformed at a time.

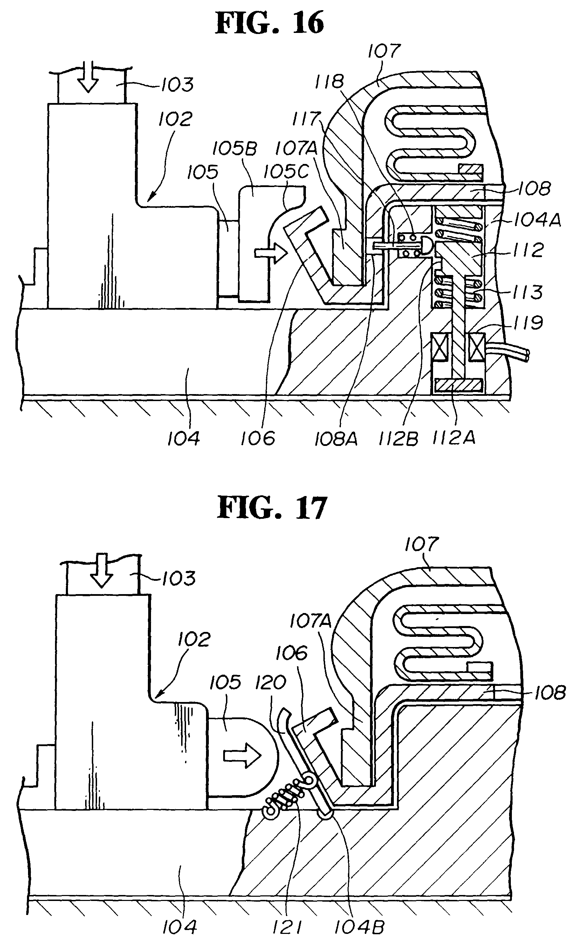

FIG. 16 shows a variant air bag assembly apparatus in which when a caulking portion 106 is pushed to be deformed in a horizontal direction by the caulking block 105, the base plate 108 as a workpiece, is prevented from inadvertently moving upwardly, and the shape at the end of caulking is uniform. Specifically a holding piece 105B for suppressing upward movement of the caulking portion 106 is provided at an end of each caulking block 105 of the cam slide apparatus 102, and a holding face 105C of a shape which extends along a locus of deformation of an upper end of the caulking portion 106 is formed on a front face of the holding piece 105B.

Further, when the base plate 108 of the workpiece is placed properly on the protruding pins 112, an arresting pin 117 is moved by the downward movement of the protruding pins 112 by a cam face or the like and caught by projecting into pin holes 108A (mounting holes used to mount the air bag apparatus onto a steering wheel or the like of an automobile) or the like of the base plate 108. Inadvertent upward movement of the base plate 108 during caulking can then be suppressed with certainty if the workpiece is placed properly onto the work receiving table 104A. Removal of the arresting pin 117 from the pin hole 108A is allowed by accommodation of the arresting pin 117 into a cam groove 112B of the corresponding protruding pin 112 as a result of upward movement of an armature 112A attracted by a solenoid 119 which is provided at a lower portion of the work receiving table 104A and energized in response to movement of the press portion 101C, which is retracted upwardly upon completion of caulking.

FIG. 17 shows an air bag assembly apparatus variant characterized in that a stiffening plate 120 having fulcrum 104B on the press base 104 is disposed between the front of each caulking block 105 of the cam slide apparatus 102 and the corresponding caulking portion 106 of the base plate 108, and the front of the caulking block 105 has an arcuate face so as not to damage the stiffening plate 120.

The stiffening plate 120 is initially held in a slightly inclined position by a holding spring 121 and is then tilted against the holding spring 121 by protrusion of the caulking block 105 to perform the caulking operation along the caulking portion 106. The upper end of the stiffening plate 120 may be bent a little to suppress upward inadvertent movement of the caulking portion 106. After caulking the stiffening plate 120 is returned to the initial position by the holding spring 121. When the inclined stiffening plates 120 are disposed around the air bag apparatus workpiece in their initial positions they effect a positioning action for proper placement of the air bag apparatus onto the work receiving table 104A.

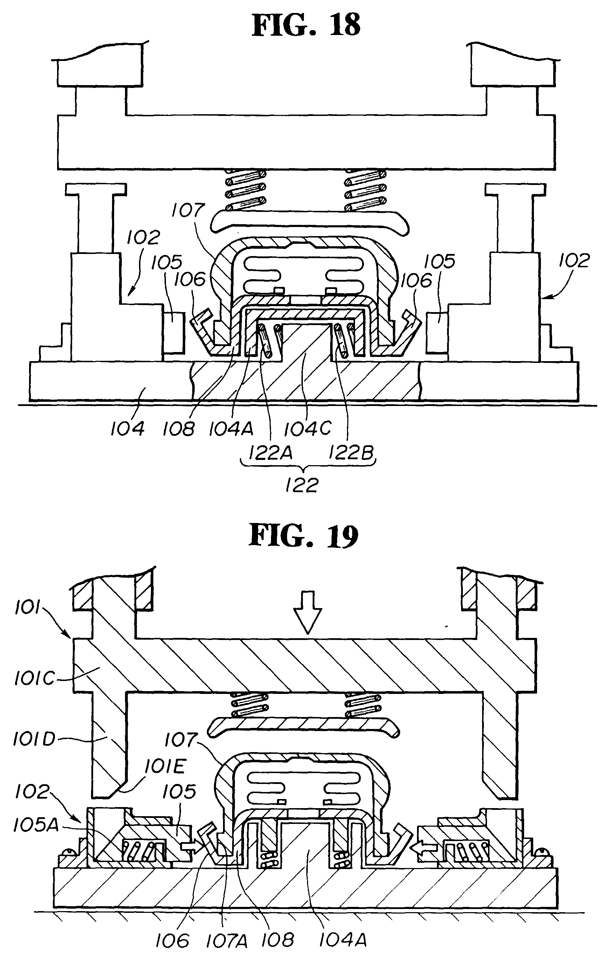

FIG. 18 shows an air bag assembly apparatus variant characterized in that the work receiving table 104A is disposed for movement in a horizontal direction on the press base 104 with a balancing spring 122 interposed therebetween. The work receiving table 104A is formed so as to have a tray-shaped cross section and is disposed in such a manner as to cover over a pressing portion 104C provided on the press base 104 so that it may be moved horizontally to left and right (when necessary, also in forward and backward directions). A pair of balancing springs 122A and 122B are disposed between the opposite sides of the pressing portion 104C and the inner side of the work receiving table 104A.

If there is for some reason an error in a temporary deforming of the caulking portions 106, prior to the caulking operation, so that when the caulking portions 106 are placed onto the work receiving table 104A some imbalance is produced between the caulking forces from the respective caulking blocks 105 of the left and right cam slide apparatus 102, the work receiving table 104A is moved to left or right by an action of the balancing spring 122 to absorb the difference in dimension caused by the error in deformation so that the left and right caulking portions 106 can be caulked equally.

FIG. 19 shows a further variant of air bag assembly apparatus.

In the present embodiment, the air bag assembly apparatus is characterized in that the press blocks 103 are formed integrally as press blocks 101D at lower portions of the press portion 101C of the press apparatus 101. A cam face 101E is formed at a lower end portion of each of the press blocks 101D, and these conform to cam faces 105A of the caulking blocks 105 of the corresponding cam slide apparatus 102 which are slidably moved in a horizontal direction.

If necessary, the press blocks 101D are secured to the press portion 101C of the press apparatus 101 so that their positions can be adjusted to correspond to the positions of the cam slide apparatus 102 which are themselves adjusted in accordance with the size of the work.

FIG. 20 shows an air bag assembly apparatus variant in which, as in FIG. 16, when a caulking portion 106 of the base plate 108 is pushed to be deformed in a horizontal direction by a corresponding caulking block 105, it is prevented that the caulking portion 106 is inadvertently moved upwardly. As in FIG. 16 holding pieces 105B are provided at the ends of the caulking blocks 105 of the cam slide apparatus 102. Furthermore the caulking blocks are disposed in an inclined relationship in the cam slide apparatus 102 such that each of them may be slidably moved in a slightly obliquely downward direction.

The pressing force in a vertical direction of each of the press blocks 103 pressed by the press apparatus is converted into a slightly obliquely downwardly acting caulking force of a caulking block 105 by way of the cam faces 103A and the cam face 105A. Consequently, the holding piece 105B at the end of each of the caulking blocks 105 prevents inadvertent upward movement of the corresponding caulking portion 106 effectively.

FIG. 21 shows an air bag assembly apparatus in which it is detected whether the base plate 108 of the air bag apparatus has been set properly on the work receiving table 104A.

A pair of pressure gauges 123A and 123B are provided at lower portions of the caulking portions 106 on the press base 104. These indicate, when the base plate 108 of the air bag apparatus workpiece is placed properly such that it is urged upwardly by the sprung protruding pins 112, predetermined numerical values depending upon the balance with the pins' biasing springs 113. Reference characters 124A and 124B denote pressure gauges which indicate pressure signals from the pressure gauges 123A and 123B,respectively.

It is to be noted that naturally the pressure gauges 123A and 123B may be replaced by other suitable sensors such as optical sensors or the like for detecting that the base plate 108 of the workpiece has been set properly onto the work receiving table 104A.

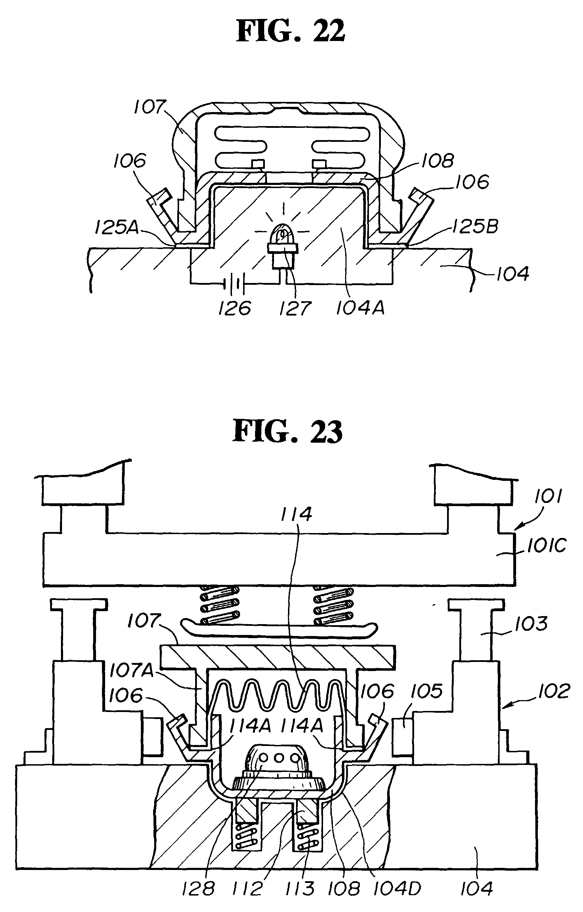

FIG. 22 shows another air bag assembly apparatus in which it is detected whether or not the case plate 108 has been set properly as the work receiving table 104A. When the base plate 108 is placed properly onto the press base 104, a pair of conductive electrodes 125A and 125B provided at lower portions of the caulking portions 106 on the press base 104 are both put into a conducting state with the conductive base plate 108 so that a power source circuit for an indicator lamp is closed to light an indicator lamp 127. Reference numeral 126 denotes a power source.

It is to be noted that naturally the electrodes 125A and 125B may be replaced by pressure switches which are put into a conducting state to close the circuit for an indicator lamp to light the indicator lamp 127 when the base plate 108 is placed properly onto the press base 104.

FIG. 23 shows an air bag assembly apparatus applied to an air bag apparatus for the assistant driver's seat. Here the leg portions 107A of the pad cover 107 and also the terminal portions 114A of the air bag 114 are initially placed on the caulking portions 106 of the base plate 108 on which the air bag 114, an inflator 128 and so forth are mounted. This workpiece is placed onto the work receiving table 104D provided substantially at the central portion of the press base 104. The air bag apparatus urges the protruding pins 112, which are embedded in the work receiving table 104D and have biasing springs 113 for projecting the air bag apparatus so as to allow removal of the same after assembly, downwardly. The subsequent caulking step is similar to that in the previous embodiments.

Since the caulking portions 106 of the base plate 108 are caulked together with the terminal portions 114A of the air bag 114, dragged in at least to a location below the leg portions 107A of the pad cover 107 to fasten the air bag, further savings in power can be realized. The present method of caulking the caulking portions 106 of the base plate 108 together with the terminal portions 114A of the air bag 114, dragged in at least to the location below the leg portions 107A of the pad cover 107, to secure the caulking portions 106 of the base plate 108 to the leg portions 107A of the pad cover 107 can naturally be adapted to the air bag apparatus of any of the embodiments described herinabove.

It is to be noted that the terminal portions 114A of the air bag 114 dragged in at least to the location below the leg portions 107A of the pad cover 107 may be further dragged back to a location outwardly of the leg portions 107A of the pad cover 107.

While embodiments of the present proposals are described above, it is a matter of course that the shape of the press apparatus, the shapes of the press blocks and the caulking blocks and the shapes of their cam faces, the shapes of the cam slide apparatus and the frame for the cam slide apparatus, the arrangement and the shapes of the press blocks and the caulking blocks of the cam slide apparatus, the shapes of the holding pieces and the holding faces of the holding pieces and so forth can be adapted suitably within the scope of the present proposals.

We trial-produced air bags using the assembling methods and the assembling apparatus for an air bag apparatus according to the embodiments described in detail above. The attempt proved that 7 seconds were required for setting of the workpiece; 5 seconds were required for the caulking operation and 3 seconds were required for removal of the workpiece; a total of approximately 15 seconds was required to complete all of the steps.

Since the conventional step according to the rivetting method requires about 30 seconds even when a robot is used, the time required for the production was reduced remarkably.

Further, with regard to the quality, the strokes of the press apparatus and the cam slide parts were able to be monitored in units of 0.1 mm to 0.5 mm, and it was also possible to confirm a degree of finish by visual observation and easily discern articles to be rejected.

Since one or a plurality of caulking portions of the base plate to be caulked to the leg portions of the pad cover are deformed at a time of securing the base plate to be to the pad cover, by means of a cam slide apparatus which is disposed around the air bag apparatus workpiece and acts to convert a vertical pressing force into a caulking force acting in a horizontal direction or acting in a circumferential direction around a fulcrum, if only the pad cover and the base plate are prepared as assembly parts, the caulking portions of the base plate can be fastened and secured firmly to the leg portions of the pad cover. Thus, air bag apparatus which realizes reduction in part cost and reduction in weight and has a sufficient strength with a simplified structure can be assembled readily and with certainty in a short period of time.

It is also possible to fasten the air bag, by caulking the caulking portions of the base plate together with terminal portions of the air bag which are dragged in at least as far as the location below the leg portions of the pad cover, and savings in power of the assembling step can be realized.

Since the press blocks and the caulking blocks of the cam slide apparatus are disposed in a suitable number around the work corresponding to the number of the caulking portions, a number of caulking portions may be caulked at one time by the downwardly moving compression operation of the press portion of the press apparatus. This remarkably contributes to improvement in the assembly performance and productivity.

If the weight of the air bag apparatus can be reduced, the steering performance of the steering wheel is good where the air bag apparatus is provided there. With regard to the number of parts, bolts, rivets, stiffening plates, pawl plates or the like are not needed at all so reduction in weight as compared with conventional air bag apparatus can be realized.

## Claims

1. Air bag apparatus for vehicle driver protection comprising an air bag (1), a base plate (3) for mounting a gas generator (2) for inflating the air bag, and a pad cover (4) to accommodate the air bag and gas generator, the pad cover having a lower extremity (5) at which it is secured to the base plate (3),
characterised in that
for securing the pad cover (4) the base plate (3) is formed with a downwardly-extending part forming an outwardly-directed inner face portion (6), a bottom portion (6A) contiguous with the inner face portion (6) and extending outwardly from the bottom thereof, and an inwardly-directed outer face portion (7) extending upwardly from the bottom portion (6A), the lower extremity (5) of the pad cover being held caulked between the opposed inner and outer face portions (6,7) so as to be secured thereto.

2. Apparatus according to claim 1 in which the pad cover (4) is trapped against removal from the base plate (3) by mechanical interlock of the lower extremity (5) thereof with the inner face portion (6) or outer face portion (7).

3. Apparatus according to claim 1 in which the lower extremity (5) of the pad cover (4) has an outwardly-projecting flange (5A) and the outer face portion (7) has a part (7A) extending inwardly above the flange (5A) to prevent escape thereof from between the inner and outer face portions (6,7).

4. Apparatus according to claim 1 in which the pad cover's lower extremity (5) has a hole (10) or groove (8) engaged by an inwardly-projecting part (7A) of the outer face portion (7) or an outwardly-projecting part (9,9A) of the inner face portion (6).

5. Apparatus according to claim 4 in which the inwardly-projecting or outwardly-projecting part (7A,9,9A) has the form of a pawl angled to resist removal of the pad cover from the base plate.

6. Apparatus according to any one of the preceding claims in which the inner and outer face portions (6,7) and bottom portion (6A) are provided as an elongate formation extending continuously along a side of the base plate (3).

7. Apparatus according to any one of the preceding claims in which the base plate (3) has a central flat plate portion (3A) for mounting the gas generator (2) and air bag (3), with a peripheral downward bend to said downwardly-extending part forming the inner face portion (6).

8. A method of making air bag apparatus as defined in claim 2 in which the pad cover (4) is positioned on the base plate (3) and the periphery of the base plate for forming the outer face portion (7) is then deformed inwardly to form the mechanical interlock between the base plate periphery and the pad cover's lower extremity (5).

9. A method of making air bag apparatus according to any one of claims 1 and 3-7 in which the pad cover (4) is positioned on the base plate (3) and the base plate periphery is deformed to bring the inner and outer face portions (6,7) into the caulking relationship with the pad cover's lower extremity (5).

10. A method according to claim 9 in which said deformation is made by means of a cam slide apparatus disposed around the air bag apparatus which acts to convert a vertical pressing force into a horizontal caulking force acting on the outer face portion (7) of the base plate (3) to deform it inwardly.

## Patentansprüche

1. Airbag-Vorrichtung zum Schutz von Fahrzeuglenkern, umfassend einen Airbag (1), eine Basisplatte (3) zum Montieren eines Gasgenerators (2) zum Aufblasen des Airbags und eine Abdeckung (4), um den Airbag und den Gasgenerator aufzunehmen, wobei die Abdeckung ein unteres Ende (5) aufweist, an dem sie an der Basisplatte (3) befestigt ist, dadurch gekennzeichnet, daß
die Basisplatte (3) zum Befestigen der Abdeckung (4) mit einem sich nach unten erstreckenden Teil ausgebildet ist, der einen nach außen gerichteten Innenflächenabschnitt (6), einen Bodenabschnitt (6A), der am Innenflächenabschnitt (6) anliegt und sich von dessen Boden nach außen erstreckt, sowie einen nach innen gerichteten Außenflächenabschnitt (7) bildet, der sich vom Bodenabschnitt (6A) nach oben erstreckt, wobei das untere Ende (5) der Abdeckung zwischen den einander gegenüberliegenden Innen- und Außenflächenabschnitten (6,7) eingeklemmt gehalten wird, so daß es daran befestigt ist.

2. Vorrichtung nach Anspruch 1, bei der die Abdeckung (4) durch mechanische Arretierung ihres unteren Endes (5) mit dem Innenflächenabschnitt (6) oder dem Außenflächenabschnitt (7) gegen Entfernen von der Basisplatte (3) eingeschlossen ist.

3. Vorrichtung nach Anspruch 1, bei der das untere Ende (5) der Abdeckung (4) einen nach außen ragenden Flansch (5A) aufweist und der Außenflächenabschnitt (7) einen Teil (7A) aufweist, der sich über den Flansch (5A) nach innen erstreckt, um zu verhindern, daß er aus dem Bereich zwischen dem Innen- und dem Außenflächenabschnitt (6, 7) freikommt.

4. Vorrichtung nach Anspruch 1, bei der das untere Ende (5) der Abdeckung ein Loch (10) oder eine Nut (8) aufweist, in das bzw. die ein nach innen ragender Teil (7A) des Außenfächenabschnitts (7) oder ein nach außen ragender Teil (9, 9A) des Innenflächenabschnitts (6) eingreift.

5. Vorrichtung nach Anspruch 4, bei der der nach innen ragende oder der nach außen ragende Teil (7A, 9, 9A) die Form einer Klaue hat, die so abgewinkelt ist, daß sie dem Entfernen der Abdeckung von der Basisplatte entgegenwirkt.

6. Vorrichtung nach einem der vorangegangenen Ansprüche, bei der der Innen- und der Außenflächenabschnitt (6, 7) sowie der Bodenabschnitt (6A) als längliche Ausbildung vorgesehen sind, die sich kontinuierlich eine Seite der Basisplatte (3) entlang erstreckt.

7. Vorrichtung nach einem der vorangegangenen Ansprüche, bei der die Basisplatte (3) einen mittleren ebenen Plattenabschnitt (3A) zum Montieren des Gasgenerators (3) und des Airbags (3) aufweist, wobei sich eine periphere Abwärtsbiegung zum sich abwärts erstreckenden Teil, der den Innenflächenabschnitt (6) bildet, biegt.

8. Verfahren zur Herstellung einer Airbagvorrichtung nach Anspruch 2, bei der die Abdeckung (4) an der Basisplatte (3) angeordnet wird und die Peripherie der Basisplatte zum Ausbilden des Außenflächenabschnitts (7) dann nach innen verformt wird, um die mechanische Arretierung zwischen der Basisplattenperipherie und dem unteren Ende (5) der Abdeckung zu bilden.

9. Verfahren zur Herstellung einer Airbagvorrichtung nach einem der Ansprüche 1 und 3 bis 7, bei dem die Abdeckung (4) auf der Basisplatte (3) angeordnet wird und die Basisplatten-Peripherie verformt wird, um den Innen- und den Außenflächenabschnitt (6, 7) in eingeklemmte Beziehung mit dem unteren Ende (5) der Abdeckung zu bringen.

10. Verfahren nach Anspruch 9, bei dem die Verformung durch eine Nockenschiebervorrichtung erfolgt, die um die Airbagvorrichtung angeordnet ist und bewirkt, daß eine vertikale Druckkraft in eine horizontale Einklemmkraft umgewandelt wird, die auf den Außenflächenabschnitt (7) der Basisplatte (3) wirkt, uni ihn nach innen zu verformen.

## Revendications

1. Appareil de sac gonflable pour la protection d'un conducteur de véhicule comprenant un sac gonflable (1), une plaque de base (3) pour le montage d'un générateur de gaz (2) pour gonfler le sac gonflable et un couvercle à rembourrage (4) pour loger le sac gonflable et le générateur de gaz, le couvercle à rembourrage ayant une extrémité inférieure (5) à laquelle il est fixé à la plaque de base (3), caractérisé en ce que, pour fixer le couvercle à rembourrage (4), la plaque de base (3) présente une partie s'étendant vers le bas formant une portion de face intérieure dirigée vers l'extérieur (6), une portion de fond (6A) contiguë avec la portion de face intérieure (6) et s'étendant vers l'extérieur depuis le fond de celle-ci ainsi qu'une portion de face extérieure dirigée vers l'intérieur (7) s'étendant vers le haut depuis la portion de fond (6A), l'extrémité inférieure (5) du couvercle à rembourrage étant maintenue par matage entre les portions de face intérieure et extérieure opposées (6, 7) de manière à être fixée à celles-ci.

2. Appareil selon la revendication 1, où le couvercle à rembourrage (4) est coincé à l'encontre d'un retrait de la plaque de base (3) par un interverrouillage mécanique de l'extrémité inférieure (5) de celui-ci avec la portion de face intérieure (6) ou la portion de face extérieure (7).

3. Appareil selon la revendication 1, où l'extrémité inférieure (5) du couvercle à rembourrage (4) a un rebord (5A) faisant salle vers l'extérieur, et la porton de face extérieure (7) comporte une partie (7A) s'étendant vers l'intérieur au-dessus du rebord (5A) pour empêcher que celle-ci se dégage depuis entre les portions de face intérieure et extérieure (6, 7).

4. Appareil selon la revendication 1, où l'extrémité inférieure (5) du couvercle à rembourrage présente un trou (10) ou une rainure (8) dans laquelle s'engage une partie faisant saillie vers l'intérieur (7A) de la portion de face extérieure (7) ou une partie faisant saillie vers l'extérieur (9, 9A) de la portion de face intérieure (6).

5. Appareil selon la revendication 4, où la partie faisant saillie vers l'intérieur ou la partie faisant saillie vers l'extérieur (7A, 9, 9A) a la forme d'un cliquet angulaire pour résister à un retrait du couvercle à rembourrage de la plaque de base.

6. Appareil selon l'une des revendications précédentes, où les portions de face intérieure et extérieure (6, 7) et la portion de fond (6A) sont réalisées comme une formation allongée s'étendant continuellement le long d'un côté de la plaque de base (3).

7. Appareil selon l'une des revendications précédentes, où la plaque de base (3) a une portion de plaque centrale plate (3A) pour installer le générateur de gaz (2) et le sac gonflable (3), avec une courbure périphérique vers le bas vers ladite partie s'étendant vers le bas formant la portion de face intérieure (6).

8. Procédé de réalisation d'un appareil de sac gonflable tel que défini dans la revendication 2, où le couvercle à rembourrage (4) est positionné sur la plaque de base (3), et la périphérie de la plaque de base pour former la portion de base extérieure (7) est ensuite déformée vers l'intérieur pour former l'interverrouillage mécanique entre la périphérie de la plaque de base et l'extrémité inférieure (5) du couvercle à rembourrage.

9. Procédé de réalisation d'un appareil de sac gonflable selon l'une des revendications 1 et 3-7, où le couvercle à rembourrage (4) est positionné sur la plaque de base (3), et la périphérie de la plaque de base est déformée pour amener les portions de face intérieure et extérieure (6, 7) dans la relation de matage avec l'extrémité inférieure (5) du couvercle à rembourrage.

10. Procédé selon la revendication 9, où ladite déformation est réalisée au moyen d'un appareil de coulisse de came disposé autour de l'appareil de sac gonflable qui agit pour transformer une force de pression verticale en une force de matage horizontale agissant sur la portion de face extérieure (7) de la plaque de base (3) pour la déformer vers l'intérieur.
